# FASCICULE DE BREVET EUROPEEN

(11) **EP 3 203 316 B1**
(45) Date de publication et mention de la délivrance du brevet: **06.06.2018**
(21) Numéro de dépôt: 17151187.6
(22) Date de dépôt: 09.04.2015
(51) Int. Cl.: G03B 21/62, B60R 1/00, G02B 5/02, G02B 5/124, G02B 27/01, B60R 1/12

(54) **SYSTEME D'AFFICHAGE D'UNE IMAGE SUR UN PARE-BRISE**
ANZEIGESYSTEM EINES BILDES AUF EINER WINDSCHUTZSCHEIBE
SYSTEM FOR DISPLAYING AN IMAGE ON A WINDSCREEN

(30) Priorité: 16.04.2014 FR 1453404
(43) Date de publication de la demande: 09.08.2017
(62) Demande divisionnaire de: 15718557.0
(73) Titulaire: COMMISSARIAT À L'ÉNERGIE ATOMIQUE ET AUX ÉNERGIES ALTERNATIVES, 75015 Paris (FR)
(72) Inventeur: MARTINEZ, Christophe, 38100 GRENOBLE (FR); ROSSINI, Umberto, 38500 COUBLEVIE (FR)
(74) Mandataire: Cabinet Beaumont

(56) Documents cités:
- EP-A1- 0 935 769
- US-A- 5 940 212
- US-A1- 2001 047 846
- US-A1- 2004 160 681

## Description

La présente demande de brevet revendique la priorité de la demande de brevet français FR14/53404 qui sera considérée comme faisant partie intégrante de la présente description.

### Domaine

La présente demande concerne un système d'affichage d'une image sur un pare-brise transparent de véhicule (par exemple de véhicule automobile), et un écran adapté à un tel système, cet écran pouvant en outre avoir des applications dans d'autres domaines.

### Exposé de l'art antérieur

On a déjà proposé des systèmes dans lesquels une image est projetée sur un film diffuseur transparent collé sur le pare-brise à l'intérieur du véhicule, permettant de fournir à un occupant du véhicule des informations s'affichant en superposition de la scène extérieure visible à travers le pare-brise.

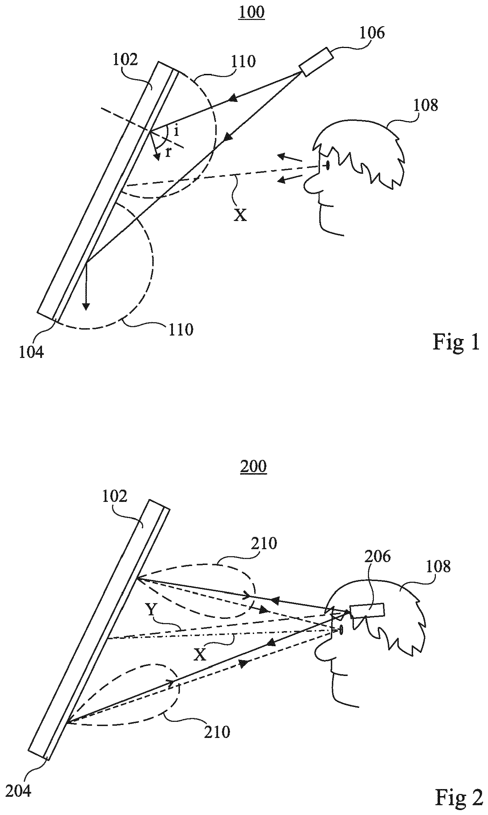

La figure 1 est une vue en coupe représentant de façon schématique un exemple d'un système 100 d'affichage d'une image sur un pare-brise transparent 102. Le système 100 comprend un film diffuseur transparent 104 revêtant la face intérieure du pare-brise, c'est-à-dire sa face tournée vers l'intérieur du véhicule. Le système 100 comprend en outre un projecteur 106 situé à l'intérieur du véhicule et agencé pour permettre de projeter une image sur tout ou partie de la surface du film 104 tournée vers l'intérieur du véhicule (c'est-à-dire opposée au pare-brise 102).

Le film 104 est un film diffuseur réflectif adapté à réfléchir, en la diffusant plus ou moins fortement, la lumière provenant du projecteur 106, et n'altérant pas ou peu la lumière provenant de l'extérieur du véhicule.

À moins que le film ou écran diffuseur 104 ne soit parfaitement lambertien, c'est-à-dire adapté à renvoyer la lumière avec une luminance constante dans toutes les directions, le cône de diffusion de la lumière réfléchie sur la surface du film 104, ou diagramme de répartition angulaire énergétique du rayonnement diffusé, est centré sur une direction distincte de la direction du rayonnement incident, formant un angle r avec la normale au point d'incidence égal à l'angle de réflexion spéculaire, c'est-à-dire à l'angle i entre la normale au point d'incidence et le rayon incident.

Compte tenu de l'espace généralement limité des habitacles de véhicules, et de la disposition du pare-brise par rapport à l'utilisateur 108, cet angle de réflexion spéculaire est généralement éloigné de l'axe principal X du regard de l'utilisateur. Ainsi, dans la plupart des cas, il est nécessaire que l'écran 104 présente un cône de diffusion 110 (représenté en trait interrompu sur la figure 1) large, proche du cas lambertien. Il en résulte que l'énergie lumineuse projetée sur l'écran 104 par le projecteur 106 est dispersée dans tout l'espace angulaire, seule une petite fraction de cette énergie étant captée par les pupilles de l'observateur.

Ainsi, un inconvénient des systèmes d'affichage du type décrit en relation avec la figure 1 est qu'ils présentent un rendement lumineux relativement faible, ce qui peut poser problème dans certaines situations, et notamment en cas de forte luminosité extérieure.

Il serait souhaitable de pouvoir disposer d'un système d'affichage d'une image sur un pare-brise, palliant tout ou partie des inconvénients des systèmes connus.

Il serait en outre souhaitable de pouvoir disposer d'un écran adapté à un tel système et pouvant en outre, plus généralement, avoir des applications dans d'autres domaines, cet écran palliant tout ou partie des inconvénients des écrans connus.

### Résumé

Ainsi, un mode de réalisation prévoit un procédé de fabrication d'un premier écran comportant des portions transparentes et des portions rétro-réfléchissantes, ce procédé comportant les étapes successives suivantes :a) prévoir un premier moule ayant une face structurée de forme complémentaire à celle d'un deuxième écran présentant des protubérances en forme de coins de cube sur sensiblement toute sa surface ;b) aplanir partiellement la face structurée du premier moule de façon à former des plateaux aux sommets de protubérances de ladite face structurée ; etc) réaliser le premier écran à partir du premier moule.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe représentant de façon schématique un exemple d'un système d'affichage d'une image sur un pare-brise ;
la figure 2 est une vue en coupe représentant de façon schématique un exemple d'un mode de réalisation d'un système d'affichage d'une image sur un pare-brise ;
les figures 3 et 4 sont des vues respectivement de dessus et en coupe représentant de façon schématique et partielle un exemple d'un écran rétroréfléchissant ;
les figures 5A à 5D sont des vues en coupe représentant de façon schématique et partielle des étapes d'un procédé de fabrication d'un exemple d'un premier mode de réalisation d'un écran ;
la figure 6 est une vue en coupe représentant de façon schématique et partielle une variante de réalisation de l'écran décrit en relation avec les figures 5A à 5D ;
la figure 7 est une vue en coupe représentant de façon schématique et partielle une autre variante de réalisation de l'écran décrit en relation avec les figures 5A à 5D ;
la figure 8 est une vue en coupe représentant de façon schématique et partielle un exemple d'un deuxième mode de réalisation d'un écran ;
la figure 9 est une vue en coupe représentant de façon schématique et partielle un exemple d'un troisième mode de réalisation d'un écran ; et
les figures 10A à 10D sont des vues en coupe représentant de façon schématique et partielle des étapes d'un procédé de fabrication d'un exemple d'un quatrième mode de réalisation d'un écran.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ", "quasiment" et "de l'ordre de", signifient "à 10 % près", ou, lorsqu'il s'agit de valeurs angulaires ou assimilées, "à 10 degrés près". En outre, dans la présente demande, sauf indication contraire, le terme transparent est utilisé pour qualifier des éléments, matériaux, films, assemblages, etc., laissant passer sans altération significative la lumière du spectre visible ou de la quasi-totalité du spectre visible. De plus, sauf indication contraire, le terme lisse fait référence à une qualité de surface optique dite "de poli optique", permettant que des faisceaux optiques soient transmis ou réfléchis par la surface sans modification significative de leurs caractéristiques de propagation. Ainsi, une surface lisse transparente permet la visualisation d'une image à travers la surface sans déformation notable. Au sens de la présente demande, une surface lisse présente une rugosité de surface inférieure à 20 nm RMS (de l'anglais "Root Mean Square" - correspondant à la racine carrée de la moyenne de l'amplitude des aspérités de la surface), et de préférence comprise entre 2 et 15 nm RMS.

La figure 2 est une vue en coupe représentant de façon schématique un exemple d'un mode de réalisation d'un système 200 d'affichage d'une image sur un pare-brise transparent 102.

Le système 200 comprend un écran 204, revêtant tout ou partie de la face intérieure du pare-brise 102, c'est-à-dire sa face tournée vers l'intérieur du véhicule. Le système 200 comprend en outre un projecteur 206 adapté à être monté sur la tête d'un utilisateur 108, par exemple le conducteur du véhicule. Le projecteur 206 est de préférence monté sur la tête de l'utilisateur au voisinage de la zone oculaire de façon que l'axe principal de projection Y soit proche de l'axe principal X du regard de l'utilisateur, par exemple de façon que les axes X et Y forment un angle inférieur ou égal à 20 degrés. A titre d'exemple non limitatif, la zone de sortie lumineuse ou zone d'émission du projecteur 206 est située à moins de 20 cm et de préférence à moins de 10 cm des pupilles de l'utilisateur. Le projecteur 206 est adapté à projeter une image sur tout ou partie de la surface de l'écran 206 tournée vers l'intérieur du véhicule (c'est-à-dire opposée au pare-brise 102).

Selon un aspect des modes de réalisation décrits, l'écran 204 est un écran partiellement transparent et partiellement rétroréfléchissant. En d'autres termes, l'écran 204 est adapté à rétroréfléchir - c'est-à-dire réfléchir en direction de sa source - de la lumière provenant du projecteur 206, et à laisser passer sans altération significative de la lumière provenant du pare-brise 102, c'est-à-dire de l'extérieur du véhicule. L'écran 204 a ainsi une fonction de transparence, permettant à l'utilisateur de voir la scène extérieure à travers le pare-brise 102 depuis l'intérieur du véhicule, et une fonction de rétroréflexion, permettant à l'utilisateur - dont les pupilles sont voisines du projecteur 206 - de voir, en superposition de la scène extérieure, une image produite par le projecteur 206. La source lumineuse 206 ne pouvant pas être placée exactement dans l'axe du regard de l'utilisateur (sauf à prévoir un élément de renvoi de type lame semi-réfléchissante placé devant l'oeil de l'utilisateur, ce qui serait relativement encombrant et pourrait provoquer une gêne pour l'utilisateur), l'écran 204 doit en outre de préférence être adapté à diffuser la lumière rétroréfléchie dans un cône de diffusion 210 englobant les pupilles de l'utilisateur, pour que l'utilisateur puisse voir l'image affichée par le projecteur. Le cône de diffusion 210 peut toutefois avoir une ouverture angulaire relativement faible, par exemple comprise dans une plage allant de 5 à 30 degrés, du fait de la proximité entre le projecteur 206 et les yeux de l'utilisateur. En tout état de cause, l'ouverture angulaire du cône de diffusion peut être nettement plus faible que dans un système à écran diffuseur réflectif du type décrit en relation avec la figure 1.

Ainsi, un avantage du système de la figure 2 est qu'il présente un rendement lumineux supérieur à celui du système de la figure 1.

Diverses variantes de réalisation, non représentées, du système de la figure 2 peuvent être prévues, ces variantes pouvant, le cas échéant, être combinées.

A titre d'exemple, le système 200 peut comprendre une caméra, par exemple mais non nécessairement montée sur la tête de l'utilisateur, adaptée à acquérir une représentation de la scène extérieure proche de celle perçue par l'utilisateur. La prévision d'une caméra peut notamment permettre de mettre en oeuvre des fonctionnalités de réalité augmentée.

Si une caméra est montée sur la tête de l'utilisateur, on peut optionnellement prévoir un système de lancement d'applications basé sur la reconnaissance, sur les images acquises par la caméra, de pictogrammes formés sur des régions périphériques de l'écran 204, par exemple par impression, gravure ou par toute autre méthode adaptée. Par exemple, un pictogramme peut correspondre à une application particulière de projection, qui peut être lancée lorsque l'utilisateur déplace sa tête de façon que le pictogramme entre dans le champ de vision de la caméra ou passe par une position particulière du champ de vision de la caméra. La fermeture de l'application peut être commandée lorsque le pictogramme sort du champ de vision de la caméra, ou entre une deuxième fois dans le champ de vision de la caméra, ou passe une deuxième fois par une position particulière du champ de vision de la caméra. Un avantage est que l'utilisateur peut ainsi lancer et/ou fermer des applications uniquement par des mouvements de tête, sans avoir à utiliser ses mains.

En outre, le système de la figure 2 peut comprendre deux projecteurs distincts situés respectivement au voisinage des deux yeux de l'utilisateur. A titre d'exemple non limitatif, un premier projecteur peut être situé à moins de 10 cm et de préférence à moins de 5 cm d'une première pupille de l'utilisateur, et un deuxième projecteur peut être situé à moins de 10 cm et de préférence à moins de 5 cm de la seconde pupille de l'utilisateur. Le cône de diffusion de la lumière rétroréfléchie par l'écran 204 peut être choisi de façon à n'englober qu'un seul des deux yeux de l'utilisateur. Un avantage est que l'on peut ainsi projeter des images différentes via les deux projecteurs, ce qui peut permettre d'améliorer le confort de vision.

A titre d'exemple non limitatif, le ou les projecteurs du système de la figure 2 peuvent être des projecteurs à micromiroirs de type DMD (de l'anglais "Digital Micromirror Device" - dispositif numérique à micromiroir). Chaque projecteur peut par exemple comporter : une source lumineuse comportant une ou plusieurs diodes électroluminescentes et un ou plusieurs éléments optiques de mise en forme de la lumière émise ; un dispositif de génération d'image de type DMD ; et un ou plusieurs éléments optiques de mise en forme du faisceau d'image. Pour minimiser l'encombrement au niveau de la tête de l'utilisateur, la source lumineuse peut être déportée par rapport au dispositif de génération d'image, la lumière produite par la source étant transmise au dispositif de génération d'image par l'intermédiaire d'un ou plusieurs guides de lumière, par exemple des fibres optiques. Un avantage est que les contraintes d'encombrement et/ou de poids pesant sur la source lumineuse peuvent être réduites.

Des exemples de modes de réalisation de l'écran 204 du système de la figure 2 vont être décrits ci-après.

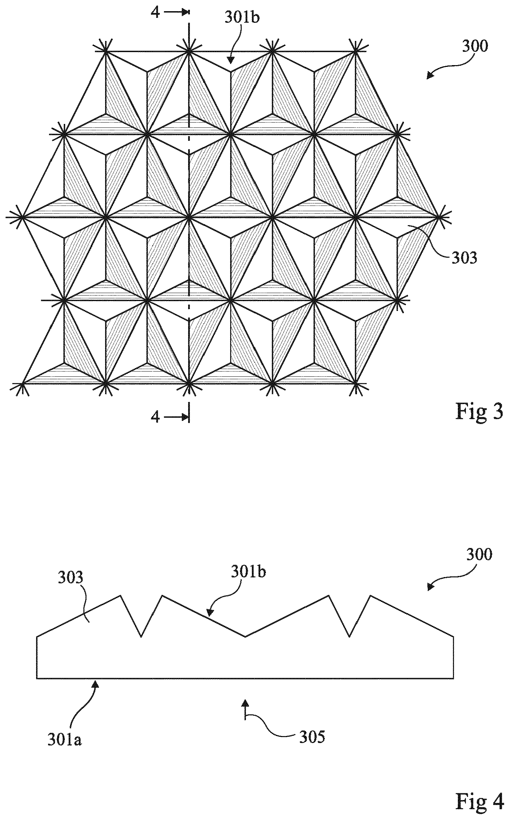

Les figures 3 et 4 sont des vues respectivement de dessus et en coupe représentant de façon schématique et partielle un exemple d'un écran rétroréfléchissant traditionnel. La figure 4 est une vue en coupe de l'écran 300 selon le plan 4-4 de la figure 3.

Dans cet exemple, l'écran 300 est constitué par une plaque, une feuille ou un film en un matériau transparent, par exemple du verre ou du plastique, dont une face 301a est approximativement lisse et dont une face 301b opposée à la face 301a est structurée et présente des protubérances 303 sensiblement identiques. Chaque protubérance 303 a sensiblement la forme d'un coin de cube, c'est-à-dire d'un trièdre comportant trois faces latérales triangulaires mutuellement perpendiculaires se rejoignant en un même point ou sommet, et, à l'opposé du sommet, une base triangulaire, par exemple en forme de triangle équilatéral. Les bases des protubérances 303 sont approximativement parallèles à la face lisse 301a de l'écran, et les protubérances 303 sont sensiblement adjacentes et recouvrent sensiblement toute la surface de l'écran. Les dimensions des protubérances 303 dépendent de l'application visée. A titre d'exemple, la base de chaque protubérance peut être un triangle équilatéral de 100 µm à 1 mm de côté.

L'écran 100 est destiné à être éclairé par sa face lisse 301a, comme illustré schématiquement par la flèche 305 de la figure 4. Lorsqu'un faisceau lumineux incident (non représenté) atteint l'écran 300, ce faisceau traverse une partie de l'épaisseur de l'écran jusqu'à atteindre la base de l'un des coins de cube 303, pénètre dans ce coin de cube, puis est réfléchi sur chacune des trois faces latérales du coin de cube, et, après réflexion sur la troisième face latérale, repart en direction de sa source.

Dans l'exemple représenté, les réflexions sur les faces latérales des coins de cube sont basées sur le principe de la réflexion totale interne. A titre de variante, les faces latérales des coins de cube peuvent être recouvertes d'un matériau réfléchissant tel que de l'aluminium du côté de la face 301b de l'écran. Les réflexions sur les faces latérales des coins de cube sont alors des réflexions de type miroir.

L'écran 300 des figures 3 et 4 n'est pas transparent, et en particulier, ne permet pas à un utilisateur situé du côté de la face 301a de l'écran de visualiser à travers l'écran une scène située du côté de la face 301b de l'écran. En effet, même lorsque la face 301b de l'écran n'est pas revêtue d'un matériau réfléchissant, les structurations de la face 301b donnent à l'écran 300 un aspect dépoli, le privant de la transparence naturelle du matériau le constituant. Un tel écran n'est donc pas adapté à un système d'affichage du type décrit en relation avec la figure 2.

Selon un aspect des modes de réalisation décrits, on prévoit un écran 204 comportant des portions transparentes et des portions rétroréfléchissantes non transparentes régulièrement réparties sur tout ou partie de sa surface. Chaque portion rétroréfléchissante est par exemple séparée de portions rétroréfléchissantes voisines par au moins une portion transparente. A titre d'exemple, l'écran 204 comprend, vu de face, une pluralité de régions élémentaires sensiblement identiques juxtaposées, recouvrant sensiblement toute la surface de l'écran, chaque région élémentaire comportant une portion rétroréfléchissante et une portion transparente. A titre d'exemple, dans chaque région élémentaire, la portion transparente entoure la portion réfléchissante (en vue de face). Les dimensions des portions rétroréfléchissantes et l'espacement entre les portions rétroréfléchissantes sont choisis de façon à permettre la visualisation d'une scène en transparence à travers l'écran 204. Les portions rétroréfléchissantes permettent par exemple d'ajouter des informations à l'image de la scène réelle vue à travers l'écran dans un système d'affichage du type décrit en relation avec la figure 2. A titre d'exemple, les dimensions des portions rétroréfléchissantes sont telles que, vu de face, la surface rétroréfléchissante de l'écran soit inférieure ou égale à 50 % et de préférence inférieure ou égale à 20 % à la surface totale de l'écran, la surface restante étant transparente. Les modes de réalisation décrits ne se limitent toutefois pas à ce cas particulier.

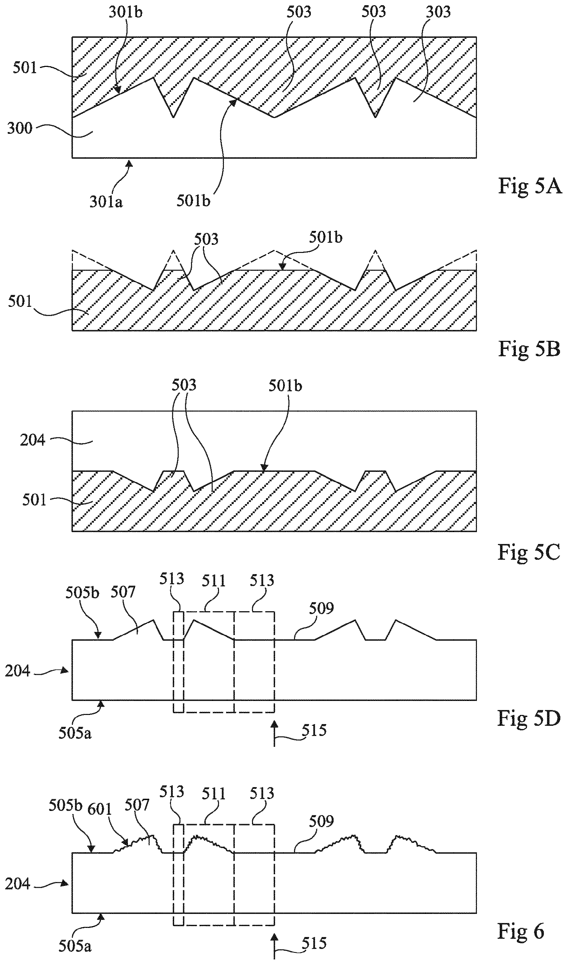

Les figures 5A à 5D sont des vues en coupe représentant de façon schématique et partielle des étapes d'un exemple de procédé de fabrication d'un premier mode de réalisation de l'écran 204.

La figure 5A illustre une étape initiale au cours de laquelle on part d'une structure 300 ayant la forme d'un écran rétroréfléchissant traditionnel non transparent dont une face 301b présente des protubérances 303 en forme de coins de cube revêtant toute ou sensiblement toute la surface de l'écran, par exemple un écran du type décrit en relation avec les figures 3 et 4. La structure 300 est par exemple un écran catadioptrique en verre ou en plastique, ou un moule métallique ayant la forme d'un écran catadioptrique. La structure 300 peut être obtenue par toute méthode connue de fabrication d'un écran rétroréfléchissant à coins de cube, par exemple une méthode du type décrit dans le brevet US8465639. Comme l'illustre la figure 5A, un moule 501 de la surface structurée 301b de la structure 300 est réalisé, par exemple par pressage ou dépôt sous forme liquide d'un matériau adapté sur la surface 301b de la structure 300. A titre d'exemple non limitatif, le moule 501 est en nickel - obtenu par exemple par galvanoplastie - ou en un matériau plastique (par exemple de type polyméthacrylate de méthyle) - obtenu par exemple par moulage à chaud. Le moule 501 présente de préférence une épaisseur supérieure à la hauteur des protubérances 303. Après une éventuelle phase de durcissement, le moule 501 est désolidarisé de la structure 300. Une face 501b du moule 501 comporte alors l'empreinte de la face 301b de la structure 300, c'est-à-dire qu'elle comporte des protubérances 503 de forme complémentaire des protubérances 303 de la structure 300.

La figure 5B illustre une étape au cours de laquelle la face structurée 501b du moule 501 est partiellement polie ou aplanie, c'est-à-dire qu'une partie du matériau du moule est éliminée du côté de la face 501b, sur une épaisseur inférieure à la hauteur des protubérances 503. A l'issue de cette étape, les protubérances 503, initialement pointues, présentent des plateaux sommitaux situés dans un même plan approximativement parallèle à un plan de base des protubérances 503.

La figure 5C illustre une étape postérieure à l'étape de polissage de la figure 5B, au cours de laquelle un écran 204 est réalisé à partir du moule 501. L'écran 204 est par exemple réalisé par pressage ou dépôt sous forme liquide d'un matériau transparent, par exemple du plastique ou du verre, sur la face 501b du moule. L'écran 204 présente de préférence une épaisseur supérieure à la hauteur des protubérances 503 du moule. Après une éventuelle phase de durcissement, l'écran 204 est désolidarisé du moule 501.

La figure 5D est une vue en coupe illustrant l'écran 204 obtenu à la sortie du moule 501. Comme cela apparaît sur la figure 5D, dans cet exemple, l'écran 204 est constitué d'une plaque, feuille ou film en un matériau transparent dont une face 505a est approximativement lisse, et dont une face 505b opposée à la face 505a présente des protubérances 507 sensiblement identiques et régulièrement réparties sur toute la surface de l'écran. Chaque protubérance 507 a une forme de coin de cube, les bases des protubérances 507 étant, dans cet exemple, approximativement parallèles à la face lisse 505a de l'écran. Comme illustré schématiquement par une flèche 515 sur la figure 5D, l'écran 204 est destiné à être éclairé par sa face 505a. Une différence entre l'écran 204 de la figure 5D et la structure 300 des figures 3 et 4 est que, dans l'écran 204 de la figure 5D, les protubérances 507 ne sont pas adjacentes mais sont séparées les unes des autres par des zones sensiblement lisses 509 de la face 505b, parallèles ou approximativement parallèles à la face 505a de l'écran, correspondant aux plateaux sommitaux des protubérances 503 du moule 501.

Dans cet exemple, chaque portion d'écran en regard d'une protubérance 507 de la face 505b correspond à une portion rétroréfléchissante non transparente de l'écran 204, et les portions d'écran situées en regard de zones lisses 509 de la face 505b correspondent à des portions transparentes de l'écran 204. Ainsi, vu de face, l'écran 204 de la figure 5D comprend une pluralité de régions élémentaires sensiblement identiques et juxtaposées, revêtant sensiblement toute la surface de l'écran, chaque région élémentaire comportant une portion rétroréfléchissante centrale 511 correspondant à une unique protubérance 507, et une portion transparente périphérique 513 entourant la portion rétroréfléchissante 511, correspondant à une portion de zone lisse 509 de la face 505b. A titre d'exemple, dans chaque région élémentaire, en vue de face, le rapport entre la surface occupée par la protubérance 507 et la surface totale de la région élémentaire, ou taux d'occultation, est inférieur ou égal à 50 % et de préférence inférieur ou égal à 20 %. En fonction de l'application visée, le taux d'occultation peut toutefois prendre d'autres valeurs.

Comme indiqué ci-dessus, pour une utilisation dans un système d'affichage du type décrit en relation avec la figure 2, l'écran 204 doit non seulement avoir des propriétés de transparence et des propriétés rétroréfléchissantes, mais doit en outre être adapté à diffuser la lumière rétroréfléchie pour permettre à l'utilisateur de percevoir une partie de cette lumière. On a en outre indiqué ci-dessus que le cône de diffusion de la lumière rétroréfléchie peut avoir une ouverture angulaire relativement faible du fait de la proximité entre la source lumineuse (le projecteur 206) et les pupilles de l'utilisateur.

Dans l'exemple de la figure 5D, l'écran 204 ne comprend pas d'élément spécifiquement adapté pour mettre en oeuvre une fonction de diffusion. En effet, les inventeurs ont constaté que les effets de diffraction sur les bords des protubérances 507 et/ou les inévitables imperfections de surface de l'écran, peuvent, dans certaines applications, suffire à obtenir l'effet de diffusion requis.

Dans certains cas, il peut toutefois être souhaitable que l'écran comporte des éléments spécifiquement adaptés pour mettre en oeuvre une fonction de diffusion.

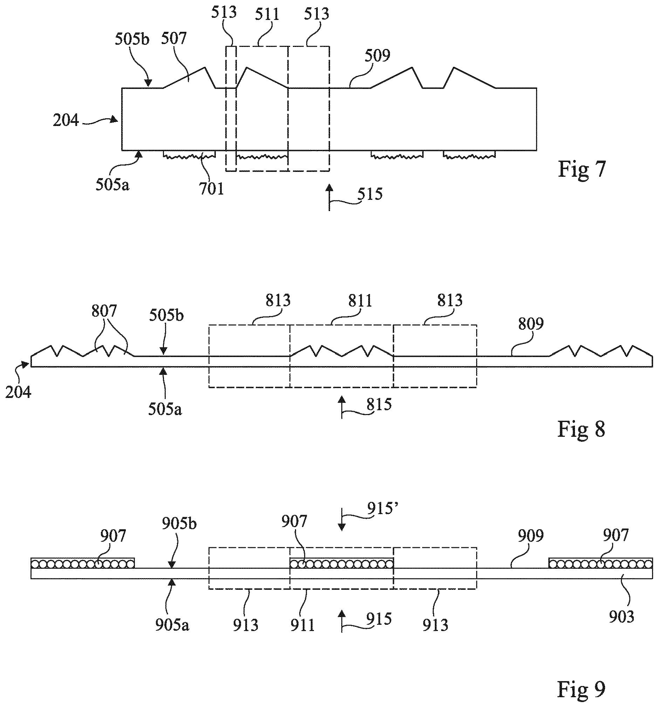

Les figures 6 et 7 sont des vues en coupe représentant de façon schématique et partielle deux variantes de réalisation de l'écran 204 de la figure 5D, dans lesquelles l'écran comprend des éléments spécifiquement adaptés à mettre en oeuvre une fonction de diffusion.

Dans l'exemple de la figure 6, l'écran 204 a une structure similaire à ce qui a été décrit en relation avec les figures 5A à 5D, et diffère de l'écran de la figure 5D en ce que les faces latérales des protubérances 507 présentent des micro- ou nano-structurations 601 adaptées à diffuser la lumière rétroréfléchie par les protubérances. De préférence, les structurations 601 de la face 505b ne sont formées que sur les protubérances 507, c'est-à-dire dans les portions rétroréfléchissantes 511 de l'écran, et non sur les zones lisses 509 de la face 505b, c'est-à-dire dans les portions transparentes 513 de l'écran, afin de ne pas altérer la transparence des portions 513 de l'écran. À titre d'exemple, les structurations 601 peuvent être réalisées en combinant le procédé de fabrication décrit en relation avec les figures 5A à 5D avec un procédé du type décrit dans le brevet US6258443, visant une surface rétroréfléchissante à facettes texturées.

Dans l'exemple de la figure 7, l'écran 204 a une structure similaire à ce qui a été décrit en relation avec les figures 5A à 5D, et diffère de l'écran de la figure 5D en ce qu'il comprend, du côté de sa face 505a, en regard ou en face de chaque protubérance 507, un élément diffusant 701. De préférence, les éléments diffusants 701 sont situés uniquement en face des protubérances rétroréfléchissantes 507, c'est-à-dire dans les portions rétroréfléchissantes 511 de l'écran, et ne s'étendent pas en face des zones lisses 509 de la face 505b, c'est-à-dire dans les portions transparentes 513 de l'écran, afin de ne pas altérer la transparence des portions 513. A titre d'exemple, les éléments diffusants 701 peuvent être formés en déposant un matériau chargé de particules diffusantes sur la face 505a de l'écran, par exemple par sérigraphie, ou en lithographiant des zones de rugosité contrôlée sur la face 505a, ou par moulage - par exemple en même temps que les protubérances 507.

À titre de variante, pour obtenir l'effet diffusant recherché, l'écran 204 peut être réalisé en un matériau transparent chargé de particules diffusantes. Pour que l'effet diffusant soit prépondérant au niveau des protubérances 507 et relativement faible ou négligeable au niveau des zones 509 de l'écran, on réalisera alors de préférence des zones 509 relativement minces par rapport aux protubérances 507, par exemple des zones 509 d'épaisseur inférieure ou égale au dixième de la hauteur des protubérances 507.

La figure 8 est une vue en coupe représentant de façon schématique et partielle un exemple d'un deuxième mode de réalisation de l'écran 204.

Dans cet exemple, l'écran 204 comprend une plaque, feuille ou film en un matériau transparent, par exemple du verre ou du plastique, dont une face 505a est approximativement lisse, et dont une face 505b opposée à la face 505a comprend des zones structurées présentant des protubérances 807 sensiblement identiques en forme de coins de cube, correspondant à des zones rétroréfléchissantes de l'écran, et des zones 809 sensiblement lisses, parallèles ou approximativement parallèles à la face 505a, correspondant à des zones transparentes de l'écran. Comme dans l'exemple de la figure 5D, l'écran 204 comprend, en vue de face, des régions élémentaires sensiblement identiques et juxtaposées, s'étendant sensiblement sur toute la surface de l'écran, chaque région élémentaire comportant une portion centrale 811 rétroréfléchissante non transparente, et une portion périphérique 813 transparente entourant la portion rétroréfléchissante 811. L'écran 204 de la figure 8 diffère de l'écran de la figure 5D en ce que, dans l'écran de la figure 8, dans chaque région élémentaire, la portion rétroréfléchissante centrale 811 comprend non pas une seule mais plusieurs protubérances 807 en coins de cube juxtaposées. Dans chaque région élémentaire, la portion transparente 813 correspond à une portion de zone lisse 809 de la face 505b. Dans chaque région élémentaire, le taux d'occultation par la portion rétroréfléchissante est par exemple inférieur ou égal à 50 % et de préférence inférieur ou égal à 20 %. Comme illustré schématiquement par une flèche 815 sur la figure 8, l'écran 204 est destiné à être éclairé par sa face 505a.

Les variantes de réalisation des figures 5 et 6 peuvent être adaptées au mode de réalisation de la figure 8, c'est-à-dire que l'écran de la figure 8 peut en outre comporter des éléments diffusants supplémentaires au niveau des portions rétroréfléchissantes 811, soit du côté de la face 505b, sous la forme de structurations sur les faces latérales des protubérances 807, soit du côté de la face 505a.

La figure 9 est une vue en coupe représentant de façon schématique et partielle un exemple d'un troisième mode de réalisation de l'écran 204.

Dans cet exemple, l'écran 204 comprend une plaque, feuille ou film 903 transparente, par exemple en verre ou en plastique, dont une face 905b comprend des zones revêtues par une couche 907 d'un matériau rétroréfléchissant à base de microbilles, et des zones 909 non revêtues par la couche 907. Les zones de l'écran dans lesquelles la plaque 903 est revêtue par la couche 907 correspondent à des zones rétroréfléchissantes de l'écran, et les zones de l'écran dans lesquelles la plaque 903 n'est pas revêtue par la plaque 907 correspondent à des zones transparentes de l'écran. A titre d'exemple, vu de face, l'écran 204 de la figure 9 comprend, comme dans les exemples des figures 5D et 8, des régions élémentaires sensiblement identiques et juxtaposées disposées sensiblement sur toute la surface de l'écran, chaque région élémentaire comprenant une portion centrale 911 rétroréfléchissante non transparente, correspondant à une portion de l'écran dans laquelle la plaque 903 est revêtue par la couche 907, et une portion périphérique 913 transparente entourant la portion rétroréfléchissante 911, correspondant à une portion de l'écran dans laquelle la plaque 913 n'est pas revêtue par la couche 907. A titre d'exemple non limitatif, dans chaque région élémentaire, vu de face, le rapport entre la surface occupée par la couche rétroréfléchissante 907 et la surface totale de la région élémentaire, ou taux d'occultation de l'écran par les portions rétroréfléchissantes, est inférieur ou égal à 50 % et de préférence inférieur ou égal à 20 %. Comme illustré schématiquement par des flèches 915 et 915' sur la figure 9, l'écran 204 peut être éclairé soit du côté de la face 905b de la plaque transparente 903, soit du côté de sa face 905a opposée à sa face 905b, les microbilles de la couche 907 étant rétroréfléchissantes pour toutes les directions d'éclairement. A titre de variante, des éléments spécifiquement adaptés à mettre en oeuvre une fonction de diffusion de la lumière rétroréfléchie peuvent être ajoutés à l'écran 204 de la figure 8, par exemple des éléments du type décrit en relation avec la figure 7.

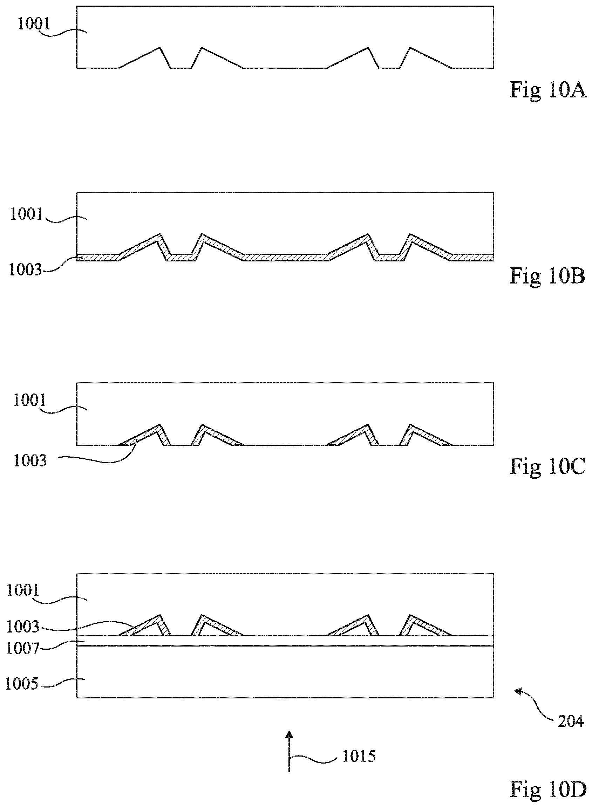

Les figures 10A à 10D sont des vues en coupe représentant de façon schématique et partielle des étapes d'un exemple de procédé de fabrication d'un quatrième mode de réalisation de l'écran 204.

La figure 10A illustre un premier élément 1001 de l'écran 204. L'élément d'écran 1001 de la figure 10A est réalisé en un matériau transparent et comprend des similitudes avec l'écran 204 de la figure 5D. En particulier, l'élément d'écran 1001 comprend une face plane et une face structurée, la face structurée comportant des structurations en coins de cube, correspondant aux portions rétroréfléchissantes de l'écran, séparées par des zones sensiblement parallèles à la face plane de l'élément d'écran 1001, correspondant aux portions transparentes de l'écran. L'élément d'écran 1001 de la figure 10A diffère de l'écran 204 de la figure 5D essentiellement en ce que, dans l'élément d'écran 1001, les structurations en coins de cube ne sont pas en protubérance mais en creux ou en échancrure par rapport aux zones de la face structurée de l'élément d'écran 1001 parallèles à la face plane de l'élément d'écran 1001.

A titre d'exemple, un moule, par exemple métallique, ayant la forme de l'écran 204 de la figure 5D, est réalisé, par exemple par galvanoplastie à partir du moule 501 de la figure 5B, ce moule étant ensuite utilisé pour réaliser l'élément d'écran 1001.

La figure 10B illustre une étape au cours de laquelle une couche métallique réfléchissante 1003 est déposée, de préférence de manière conforme, sur la surface structurée de l'élément d'écran 1001, de manière à s'étendre à la fois dans les échancrures en coins de cube, c'est-à-dire sur les faces latérales de celles-ci, et sur les zones planes entourant les échancrures. L'épaisseur de la couche métallique 1003 est inférieure à la profondeur des échancrures en coins de cube. A titre d'exemple, la profondeur des échancrures en coins de cube est comprise entre 60 et 100 nm, et l'épaisseur de la couche métallique 1003 est comprise entre 30 et 60 nm. La couche métallique 1003 est par exemple une couche d'argent ou d'aluminium.

La figure 10C illustre une étape au cours de laquelle on retire, par exemple par polissage, les portions de la couche métallique 1003 revêtant les zones planes entourant les échancrures de l'élément d'écran 1001. Ainsi, la couche métallique 1003 ne reste présente que dans les échancrures de l'élément d'écran 1001, plus précisément sur les faces latérales de celles-ci.

La figure 10D illustre une étape au cours de laquelle un deuxième élément d'écran 1005 est assemblé au premier élément d'écran 1001, du côté de la face structurée du premier élément d'écran 1001. Le deuxième élément d'écran 1005 peut être un film, une plaque ou une feuille transparente dont les deux faces sont de préférence lisses et planes. L'assemblage des éléments d'écran 1001 et 1005 est par exemple réalisé au moyen d'une couche de colle transparente 1007. La couche de colle 1007 remplit de préférence intégralement les échancrures en coins de cube de l'élément d'écran 1001. A titre d'exemple, les éléments d'écran 1001 et 1005 et la colle transparente 1007 présentent sensiblement le même indice optique. A titre d'exemple, des colles optiques d'indice de l'ordre de 1,5 sont disponibles dans le commerce, par exemple la colle connue sous la dénomination commerciale Polytec UV 2137. Ces colles s'accordent bien avec le verre ou le polyméthacrylate de méthyle, qui peuvent être utilisés pour former les éléments d'écran 1001 et 1005.

Comme l'illustre la figure 10D, l'écran 204 est formé par l'assemblage des éléments d'écran 1001 et 1003, la couche métallique 1003 revêtant les structurations en coins de cube, et la couche de colle transparente 1007.

Comme illustré schématiquement par une flèche 1015 sur la figure 10D, l'écran 204 est destiné à être éclairé par la face de l'élément d'écran 1005 opposée à l'élément d'écran 1001.

On obtient ainsi un écran d'affichage dont les structurations en coins de cube sont protégées de l'environnement par le fait qu'elles soient situées à l'intérieur de l'écran, et dont l'efficacité angulaire de rétroréflexion est améliorée par la présence de la métallisation 1003 revêtant les faces latérales des échancrures en coins de cube. En outre, le nettoyage de l'écran se trouve facilité par le fait que ses deux faces extérieures sont sensiblement lisses.

Comme dans l'exemple de la figure 7, des éléments diffusants (non représentés sur la figure 10D) peuvent être disposés sur la face de l'élément d'écran 1005 opposée à l'élément d'écran 1001, en regard des structurations en coins de cube de l'écran. De préférence, ces éléments diffusants sont disposés uniquement en regard des structurations en coins de cube, et non pas en regard des zones planes de la face structurée de l'élément 1001, de façon à ne pas affecter la transparence des portions transparentes de l'écran.

Des modes de réalisation particuliers ont été décrits. Diverses variantes et modifications apparaîtront à l'homme de l'art.

En particulier, les modes de réalisation décrits ne se limitent pas aux exemples représentés sur les figures dans lesquels l'écran 204 a une forme générale approximativement plane. L'homme du métier saura adapter les exemples décrits à des écrans incurvés, notamment en vue de la projection d'images sur des pare-brise incurvés.

De plus, les modes de réalisation décrits en relation avec les figures 5A à 5D, 6, 7 et 8 ne se limitent pas au cas où les réflexions sur les protubérances en coins de cube des portions rétroréfléchissantes de l'écran sont de type réflexion totale interne. À titre de variante, les faces latérales des coins de cube peuvent être revêtues d'un matériau réfléchissant tel que l'aluminium ou l'argent.

De plus, les modes de réalisation décrits ne se limitent pas aux exemples décrits ci-dessus de disposition, dimensionnement, et répartition sur la surface de l'écran des portions rétroréfléchissantes et des portions transparentes de l'écran. En fonction de l'application visée, l'homme du métier saura prévoir d'autres dispositions des portions rétroréfléchissantes.

Par ailleurs, bien que les modes de réalisation d'écran partiellement transparent et partiellement rétroréfléchissant décrits ci-dessus soient avantageux dans un système d'affichage d'une image sur un pare-brise du type décrit en relation avec la figure 2, les écrans proposés peuvent avoir d'autres applications. A titre d'exemple non limitatif, de tels écrans peuvent être utilisés pour diverses applications de réalité augmentée pour lesquelles la transparence de la zone de projection est requise. On peut notamment prévoir des espaces de scénographie dans des musées, dans lesquels des images sont projetées sur des vitrines derrière lesquelles sont exposées des oeuvres réelles. A titre de variante, de tels écrans peuvent être utilisés non pas comme écran de projection mais comme écran de protection visant à dissuader des visiteurs de photographier au flash certaines oeuvres sensibles. En effet, dans de nombreux musées, les panneaux interdisant la photographie au flash ne suffisent pas à dissuader les visiteurs de réaliser de telles photographies, ce qui peut entrainer une dégradation des oeuvres. L'installation d'un écran partiellement transparent et partiellement rétroréfléchissant devant les oeuvres aurait pour effet que les photographies au flash seraient inévitablement ratées, sans pour autant empêcher les visiteurs de voir les oeuvres. Les visiteurs seraient ainsi dissuadés de réaliser des photographies au flash.

## Revendications

1. Procédé de fabrication d'un premier écran (204) comportant des portions transparentes (513) et des portions rétro-réfléchissantes (511), ce procédé comportant les étapes successives suivantes :
a) prévoir un premier moule (501) ayant une face structurée (501b) de forme complémentaire à celle d'un deuxième écran (300) présentant des protubérances en forme de coins de cube sur sensiblement toute sa surface ;
b) aplanir partiellement la face structurée (501b) du premier moule (501) de façon à former des plateaux aux sommets de protubérances (503) de ladite face structurée (501b) ; et
c) réaliser le premier écran (204) à partir du premier moule (501).

2. Procédé selon la revendication 1, dans lequel, à l'étape c), le premier écran (204) est réalisé par pressage ou dépôt sous forme liquide d'un matériau transparent sur la face structurée (501b) du premier moule (501).

3. Procédé selon la revendication 2, comportant en outre la formation, sur la face structurée (505b) du premier écran (204), au niveau de protubérances en forme de coins de cube (507) du premier écran (204), de micro- ou de nano-structurations (601) adaptées à diffuser la lumière.

4. Procédé selon la revendication 2, comportant en outre la formation d'éléments diffusants (701) sur la face (505a) du premier écran (204) opposée à sa face structurée (505b), en regard de zones planes (509) entourant des protubérances en forme de coins de cube (507) du premier écran (204).

5. Procédé selon la revendication 4, dans lequel les éléments diffusants (701) sont formés par dépôt d'un matériau chargé en particules diffusantes, ou par lithographie ou moulage de rugosités, sur la face (505a) du premier écran (204) opposée à sa face structurée (505b).

6. Procédé selon la revendication 2, dans lequel le matériau transparent en lequel est réalisé le premier écran (204) est chargé en particules diffusantes, et dans lequel l'épaisseur du premier écran (204), dans des zones (509) du premier écran (204) entourant des protubérances en forme de coins de cube (507) du premier écran (204), est inférieure ou égale au dixième de la hauteur des protubérances en forme de coins de cube du premier écran (204).

7. Procédé selon la revendication 1, dans lequel l'étape c) comprend les étapes successives suivantes :
c1) réaliser, à partir du premier moule (501), un deuxième moule de forme complémentaire à celle du premier moule ;
c2) réaliser un premier élément (1001) du premier écran (204) à partir du deuxième moule ;
c3) déposer une couche métallique réfléchissante (1003) sur la face structurée du premier élément (1001) du premier écran (204) ; et
c4) retirer des portions de la couche métallique (1003) revêtant des zones planes entourant des échancrures en forme de coins de cube de la face structurée du premier élément (1001) du premier écran (204).

8. Procédé selon la revendication 7, comprenant en outre, après l'étape c4), une étape d'assemblage d'un deuxième élément (1005) du premier écran (204) du côté de la face structurée du premier élément (1001) du premier écran (204).

9. Procédé selon la revendication 8, dans lequel le deuxième élément (1005) du premier écran (204) est un film, une feuille ou une plaque en un matériau transparent dont les deux faces sont lisses et planes, l'assemblage des premier (1001) et deuxième (1005) éléments du premier écran (204) étant réalisé au moyen d'une colle transparente (1007) remplissant les échancrures en forme de coins de cube de la face structurée du premier élément (1001) du premier écran (204).

10. Procédé selon la revendication 9, dans lequel les premier (1001) et deuxième (1005) éléments du premier écran (204) et la colle transparente (1007) ont sensiblement le même indice de réfraction.

11. Procédé selon l'une quelconque des revendications 7 à 10, dans lequel, à l'étape c1), le deuxième moule est réalisé à partir du premier moule (501) par galvanoplastie.

12. Procédé selon l'une quelconque des revendications 7 à 11, dans lequel, à l'étape c3), la couche métallique (1003) est formée par un procédé de dépôt conforme.

13. Procédé selon l'une quelconque des revendications 7 à 12, dans lequel la couche métallique (1003) déposée à l'étape c3) présente une épaisseur inférieure à la profondeur des échancrures en coins de cube de la face structurée du premier élément (1001) du premier écran (204).

14. Procédé selon l'une quelconque des revendications 7 à 13, dans lequel la couche métallique (1003) déposée à l'étape c3) est une couche d'aluminium ou d'argent.

15. Procédé selon l'une quelconque des revendications 7 à 14, dans lequel l'étape c4) est réalisée par polissage.

## Patentansprüche

1. Ein Verfahren zur Herstellung eines ersten Bildschirms (204), der transparente Teile (513) und retroreflektierende Teile (511) aufweist, wobei das Verfahren die folgenden aufeinanderfolgenden Schritte aufweist:
a) Vorsehen einer ersten Form (501) mit einer strukturierten Oberfläche (501b) mit einer Form, die komplementär zu der eines zweiten Bildschirms (300) ist, und Vorsprünge in der Form von Würfelecken an im Wesentlichen seiner ganzen Oberfläche aufweist;
b) teilweises Polieren der strukturierten Oberfläche (501b) der ersten Form (501), um Plateaus an der Oberseite der Vorsprünge (503) der strukturierten Oberfläche (501b) zu bilden; und
c) Realisieren des ersten Bildschirms (204) durch Verwenden der ersten Form (501).

2. Verfahren nach Anspruch 1, wobei im Schritt c) der erste Bildschirm (204) durch Andrücken oder Aufbringen eines transparenten Materials in flüssiger Form an die strukturierte Oberfläche (501b) der ersten Form (501) realisiert wird.

3. Verfahren nach Anspruch 2, das ferner an der strukturierten Oberfläche (505b) des ersten Bildschirms (204) an dem Niveau der würfeleckenförmigen Vorsprünge (507) des ersten Bildschirms (204) das Ausbilden von Mikro- oder Nanostrukturen (601) aufweist, die geeignet sind Licht zu streuen.

4. Verfahren nach Anspruch 2, das ferner das Ausbilden streuender Elemente (701) an einer Oberfläche (505a) des ersten Bildschirms (204) entgegengesetzt zu seiner strukturierten Oberfläche (505b) aufweist, und zwar im Hinblick auf planare Bereiche (509), die würfeleckenförmige Vorsprünge (507) des ersten Bildschirms (204) umgeben.

5. Verfahren nach Anspruch 4, wobei die streuenden Elemente (701) durch Aufbringen eines mit streuenden Partikeln gefüllten Materials gebildet werden oder durch Lithographie oder Formen von Bereichen mit kontrollierter Rauigkeit, und zwar an der Oberfläche (505a) des ersten Bildschirms (204) entgegengesetzt zu seiner strukturierten Oberfläche (505b).

6. Verfahren nach Anspruch 2, wobei das transparente Material des ersten Bildschirms (204) mit streuenden Partikeln gefüllt ist, und wobei die Dicke des ersten Bildschirms (204) in Bereichen (509) des ersten Bildschirms (204), die würfeleckenförmige Vorsprünge (507) des ersten Bildschirms (204) umgeben, kleiner oder gleich zu einem Zehntel der Höhe der würfeleckenförmigen Vorsprünge des ersten Bildschirms (204) ist.

7. Verfahren nach Anspruch 1, wobei Schritt c) die aufeinanderfolgenden Schritte aufweist:
c1) Realisieren durch Verwenden der ersten Form (501) einer zweiten Form, die eine Form besitzt, die komplementär zu der der ersten Form ist;
c2) Realisieren eines ersten Elements (1001) des ersten Bildschirms (204) durch Verwenden der zweiten Form;
c3) Aufbringen einer reflektierenden Metallschicht (1003) an einer strukturierten Oberfläche des ersten Elements (1001) des ersten Bildschirms (204); und
c4) Entfernen von Teilen der Metallschicht (1003), welche planare Bereiche abdeckt, die würfeleckenförmige Ausnehmungen der strukturierten Oberfläche des ersten Elements (1001) des ersten Bildschirms (204) umgeben.

8. Verfahren nach Anspruch 7, das ferner Folgendes aufweist: nach Schritt c4) einen Schritt des Anordnens eines zweiten Elements (1005) des ersten Bildschirms (204) an der Seite der strukturierten Oberfläche des ersten Elements (1001) des ersten Bildschirms (204).

9. Verfahren nach Anspruch 8, wobei das zweite Element (1005) des ersten Bildschirms (204) ein Film, ein Bogen oder eine Platte aus einem transparenten Material mit zwei entgegengesetzten glatten und planaren Oberflächen ist, wobei die Anordnung der ersten (1001) und zweiten (1005) Elementen des ersten Bildschirms (204) mittels einer transparenten Klebeschicht (1007) realisiert wird, die die würfeleckenförmige Ausnehmungen der strukturierten Oberfläche des ersten Elements (1001) des ersten Bildschirms (204) füllt.

10. Verfahren nach Anspruch 9, wobei die ersten (1001) und zweiten (1005) Elemente des ersten Bildschirms (204) und die transparente Klebeschicht (1007) im Wesentlichen denselben Brechungsindex haben.

11. Verfahren nach einem der Ansprüche 7 bis 10, wobei in Schritt c1) die zweite Form durch Verwenden der ersten Form (501) durch Elektroplattierung realisiert wird.

12. Verfahren nach einem der Ansprüche 7 bis 11, wobei in Schritt c3) die Metallschicht (1003) durch ein konformes Aufbringungsverfahren gebildet wird.

13. Verfahren nach einem der Ansprüche 7 bis 12, wobei die reflektierende Metallschicht (1003), die im Schritt c3) aufgebracht wurde, eine Dicke besitzt, die kleiner ist als die Tiefe der würfeleckenförmigen Ausnehmungen der strukturierten Oberflächenschicht des ersten Elements (1001) des ersten Bildschirms (204).

14. Verfahren nach einem der Ansprüche 7 bis 13, wobei die Metallschicht (1003), die in Schritt c3) aufgebracht wurde, eine Aluminium- oder Silberschicht ist.

15. Verfahren nach einem der Ansprüche 7 bis 14, wobei Schritt c4) durch Polieren realisiert wird.

## Claims

1. A method of manufacturing a first screen (204) comprising transparent portions (513) and retroreflective portions (511), the method comprising the following successive steps:
a) providing a first mold (501) having a structured surface (501b) having a shape complementary to that of a second screen (300) exhibiting protrusions in the shape of cube corners on substantially all its surface;
b) partially polishing the structured surface (501b) of the first mold (501) to form plateaus on top of the protrusions (503) of said structured surface (501b); and
c) realizing the first screen (204) using the first mold (501).

2. The method of claim 1, wherein, at step c), the first screen (204) is realized by pressing or depositing in liquid form a transparent material on the structured surface (501b) of the first mold (501).

3. The method of claim 2, further comprising the formation, on the structured surface (505b) of the first screen (204), at the level of the cube corner shaped protrusions (507) of the first screen (204), of micro- or nanostructures (601) capable of diffusing light.

4. The method of claim 2, further comprising the formation of diffusing elements (701) on a surface (505a) of the first screen (204) opposite to its structured surface (505b), in view of planar regions (509) surrounding cube corner shaped protrusions (507) of the first screen (204).

5. The method of claim 4, wherein the diffusing elements (701) are formed by depositing a material filled with diffusing particles, or by lithography or molding of areas of controlled roughness, on the surface (505a) of the first screen (204) opposite to its structured surface (505b).

6. The method of claim 2, wherein the transparent material of the first screen (204) is filled with diffusing particles, and wherein the thickness of the first screen (204), in areas (509) of the first screen (204) surrounding cube corner shaped protrusions (507) of the first screen (204), is smaller than or equal to one tenth of the height of the cube corner shaped protrusions of the first screen (204).

7. The method of claim 1, wherein step c) comprises the following successive steps:
c1) realizing, using the first mold (501), a second mold having a shape complementary to that of the first mold;
c2) realizing a first element (1001) of the first screen (204) using the second mold;
c3) depositing a reflective metallic layer (1003) on a structured surface of the first element (1001) of the first screen (204); and
c4) removing portions of the metallic layer (1003) coating planar areas surrounding cube corner shaped recesses of the structured surface of the first element (1001) of the first screen (204).

8. The method of claim 7, further comprising, after step c4), a step of assembling a second element (1005) of the first screen (204) on the side of the structured surface of the first element (1001) of the first screen (204).

9. The method of claim 8, wherein the second element (1005) of the first screen (204) is a film, a sheet, or a plate of a transparent material having two opposite smooth and planar surfaces, the assembly of the first (1001) and second (1005) elements of the first screen (204) being realized by means of a transparent glue layer (1007) filling the cube corner shaped recesses of the structured surface of the first element (1001) of the first screen (204).

10. The method of claim 9, wherein the first (1001) and second (1005) elements of the first screen (204) and the transparent glue layer (1007) have substantially the same refractive index.

11. The method of any of claims 7 to 10, wherein, at step c1), the second mold is realized using the first mold (501), by electroplating.

12. The method of any of claims 7 to 11, wherein, at step c3), the metallic layer (1003) is formed by a conformal deposition method.

13. The method of any of claims 7 to 12, wherein the reflective metallic layer (1003) deposited at step c3) has a thickness smaller than the depth of the cube corner shaped recesses of the structured surface layer of the first element (1001) of the first screen (204).

14. The method of any of claims 7 to 13, wherein the metallic layer (1003) deposited at step c3) is an aluminum or silver layer.

15. The method of any of claims 7 to 14, wherein step c4) is realized by polishing.
